# EUROPEAN PATENT APPLICATION

(11) **EP 4 703 327 A1**
(43) Date of publication of application: **04.03.2026**
(21) Application number: 24796571.8
(22) Date of filing: 05.03.2024
(51) Int. Cl.: C01G 41/00, B32B 27/20, C08J 3/20, C08J 5/18, C08K 3/20, C08K 3/24, C08K 3/105, C08L 33/00, C08L 69/00, C08L 101/00, C09C 1/00, C09C 3/00, C09K 3/00

(54) **DISPERSED POWDER AND METHOD FOR PRODUCING SAME, HEAT RAY-BLOCKING RESIN MOLDED BODY, AND HEAT RAY-BLOCKING LAMINATE**

(30) Priority: 26.04.2023 JP 2023072652; 08.09.2023 JP 2023146003
(71) Applicant: SUMITOMO METAL MINING CO., LTD., Tokyo 105-8716 (JP)
(72) Inventor: YAMADA, Koyo, Isa-shi, Kagoshima 895-2501 (JP); ITO, Takafumi, Isa-shi, Kagoshima 895-2501 (JP); CHONAN, Takeshi, Isa-shi, Kagoshima 895-2501 (JP)
(74) Representative: TBK
(86) International application number: PCT/JP2024/008296
(87) International publication number: WO 2024/224813

(57) **Abstract**

There is provided a dispersion powder containing composite tungsten oxide fine particles represented by a general formula MxWOy, having a hexagonal crystal structure, having a crystallite size of 15 nm or more and 80 nm or less, and surface-modified with an acrylic dispersant, wherein a weight ratio of the dispersant to the composite tungsten oxide fine particles is in a range of 0.3 ≤ (weight of dispersant / weight of composite tungsten oxide fine particles) < 3.0, and heat ray shielding resin molded product and heat ray shielding laminate produced using the dispersed powder.

## Description

### Technical Field

The present invention relates to a dispersion powder that can be used to produce a heat ray shielding resin molded product having high weather resistance, a method for producing the same, a heat ray shielding resin molded product having high weather resistance to which the dispersion powder is applied, and a heat ray shielding laminate having high weather resistance.

### Background Art

Sunlight entering through a so-called opening such as a window and door of various buildings and vehicles contains ultraviolet and infrared rays in addition to visible light. Among the infrared rays contained in the sunlight, near-infrared rays with a wavelength of 800 to 2500 nm are called heat rays, and when they enter through the opening, they cause the temperature inside a room to rise. To resolve this, in recent years, in the field of window materials for various buildings and vehicles, there has been a rapid increase in demand for a heat ray shielding substrate that blocks heat rays while allowing sufficient visible light in, thereby suppressing the rise of the temperature inside the room while maintaining brightness, and many patents related to the heat ray shielding substrate have been proposed.

For example, Patent Documents 1 to 3 propose a heat ray shielding plate in which a heat ray reflective film formed by vapor-depositing a metal or metal oxide onto a transparent resin film is adhered to a transparent substrate such as glass, an acrylic plate, or a polycarbonate plate. However, these heat ray shielding plates have a drawback that the heat ray reflective film itself is very expensive and that a complicated process such as an adhesive step is required, resulting in high cost. Further, due to poor adhesiveness between the transparent substrate and the heat ray reflective film, there is also a drawback that the film may peel off over time. Further, many heat ray shielding plates have been proposed which are formed by directly depositing a metal or metal oxide onto the surface of a transparent substrate. However, the production of these heat ray shielding plates requires equipment that requires high vacuum and highly accurate atmospheric control, which makes them unsuitable for mass production and less versatile.

In addition, for example, Patent Documents 4 and 5 propose heat ray shielding plates and films in which an organic near-infrared absorbing agent, such as a phthalocyanine-based compound or an anthraquinone-based compound, is kneaded into a thermoplastic transparent resin, such as a polyethylene terephthalate resin, a polycarbonate resin, an acrylic resin, a polyethylene resin, or a polystyrene resin. However, these heat ray shielding plates and films must contain a large amount of near-infrared absorbing agent in order to sufficiently shield heat rays, but there remains a problem that the incorporation of a large amount of near-infrared absorbing agent reduces a visible light transmittance. Further, because an organic compound is used as the near-infrared absorbing agent, the weather resistance is poor when applied to window materials for buildings or vehicles that are constantly exposed to direct sunlight, and it cannot be said that the material is necessarily suitable.

Under such a technical background, the applicant focused on hexaboride, which has a large amount of free electrons, and Patent Documents 6 to 8 disclose coating solutions for forming heat ray shielding films, which are prepared by dispersing the hexaboride as a heat ray shielding component in an organic solvent and adding various binders, and heat ray shielding films obtained by applying the coating solutions to various transparent substrates and then curing them.

However, these inventions are provided on the assumption that the hexaboride fine particles serving as the heat ray shielding component are dispersed in an organic solvent. Therefore, the coating liquid for forming a heat ray shielding film is treated as a dangerous material under the Fire Service Act, and there are various restrictions in the transportation of the coating liquid for forming a heat ray shielding film, which has led to a problem of relatively high transportation cost.

Further, when a dispersion liquid of hexaboride fine particles as a heat ray shielding component dispersed in an organic solvent is stored for a long period of time, the hexaboride fine particles are prone to agglomeration due to Brownian motion, which can sometimes result in the formation of precipitates.

Further, when the hexaboride fine particles are kneaded into a transparent resin material and molded, since the hexaboride fine particles are dispersed in an organic solvent, it is necessary to knead the hexaboride fine particles uniformly into the transparent resin material while removing the organic solvent. This has resulted in a problem that the equipment and processes to be used are complicated and the method is not necessarily optimal.

Then, as Patent Document 9, the present applicant discloses a highly heat-resistant masterbatch containing a thermoplastic resin, tungsten oxide fine particles and/or composite tungsten oxide fine particles having a hexagonal crystal structure, and a highly heat-resistant dispersant having a thermal decomposition temperature of 230°C or higher, satisfying 10 ≥ [weight of the highly heat-resistant dispersant / (weight of the tungsten oxide fine particles and/or weight of the composite tungsten oxide fine particles)] ≥ 0.5.

### Citation List

### Patent Documents

[Patent Document 1] Japanese Patent Application Publication No. 61-277437
[Patent Document 2] Japanese Patent Application Publication No. 10-146919
[Patent Document 3] Japanese Patent Application Publication No. 2001-179887
[Patent Document 4] Japanese Patent Application Publication No. 6-256541
[Patent Document 5] Japanese Patent Application Publication No. 6-264050
[Patent Document 6] Japanese Patent Application Publication No. 11-181336
[Patent Document 7] Japanese Patent Application Publication No. 2000-96034
[Patent Document 8] Japanese Patent Application Publication No. 2000-169765
[Patent Document 9] Japanese Patent Application Publication No. 2008-024902

### Summary of the Invention

### Problem to be Solved by the Invention

However, in the highly heat-resistant masterbatch described in Patent Document 9, in order to disperse tungsten oxide fine particles and/or composite tungsten oxide fine particles, which are heat ray shielding fine particles, in a thermoplastic resin, it has been necessary to add a large amount of a highly heat-resistant dispersant. Accordingly, the proportion of the heat ray shielding fine particles in the fine particle dispersion powder is low, and there is still room for improvement in the content of the heat ray shielding fine particles. Further, there is no description of weather resistance in Patent Document 9, leaving room for further investigation. The present invention has been made under the above circumstances, and the problem to be solved is to provide a heat ray shielding resin molded product and a heat ray shielding laminate having excellent weather resistance, high transmittance in a visible light region, and excellent heat ray shielding function, and to provide a dispersion powder for producing them.

### Means for solving the Problem

Under the above circumstances, the present inventors conducted research and it is found that by significantly increasing the content of heat ray shielding fine particles in the dispersion powder so as to be adjustable by adding dilution solvent as needed, the following is achieved: a dispersion powder with a large concentration adjustment margin, a method for producing the same, a heat ray shielding resin molded product having high weather resistance and a heat ray shielding laminate having high weather resistance to which the dispersion powder is applied. Thus, the present invention is completed.

That is, a first invention of the present invention is a dispersion powder containing composite tungsten oxide fine particles represented by a general formula MxWOy (wherein M element is one or more elements selected from group 1, group 2, and group 13 elements in a periodic table, satisfying 0.1 ≤ x ≤ 1.0, 2.0 ≤ y < 4.0), having a hexagonal crystal structure, having a crystallite size of 15 nm or more and 80 nm or less, and surface-modified with an acrylic dispersant, wherein a weight ratio of the dispersant to the composite tungsten oxide fine particles is in a range of 0.3 ≤ (weight of dispersant / weight of composite tungsten oxide fine particles) < 3.0; a second invention is the dispersion powder according to the first invention, wherein the acrylic dispersant has an acidic functional group as a functional group; a third invention is the dispersion powder according to the first or second invention, wherein the M element contained in the composite tungsten oxide fine particles is at least one element selected from the group consisting of Cs, Rb, K, Tl, and Ba; a fourth invention is a method for producing the dispersion powder, the method including: adding composite tungsten oxide fine particles having a hexagonal crystal structure and represented by a general formula MxWOy (wherein M element is one or more elements selected from group 1, group 2, and group 13 elements in a periodic table, satisfying 0.1 ≤ x ≤ 1.0, 2.0 ≤ y < 4.0) and an acrylic dispersant, to an organic solvent, and then pulverizing and dispersing a mixture, to produce a dispersion liquid in which the composite tungsten oxide fine particles have a crystallite size of 15 nm or more and 80 nm or less; and removing the organic solvent from the dispersion liquid to produce a dispersion powder in which a weight ratio of the dispersant to the composite tungsten oxide fine particles is in a range of 0.3 ≤ (weight of dispersant / weight of composite tungsten oxide fine particles) < 3.0; a fifth invention is a heat ray shielding resin molded product obtained by diluting and kneading the dispersion powder according to the first or second invention with a thermoplastic resin molding material, and molding a mixture into a predetermined shape; a sixth invention is the heat ray shielding resin molded product according to the fifth present invention, wherein the thermoplastic resin molding material is a polycarbonate resin or an acrylic resin; and a seventh invention is a heat ray shielding laminate, wherein the heat-ray shielding resin molded product according to the fifth invention is laminated with another molded product.

### Advantageous Effects of Invention

The dispersion powder according to the present invention is diluted and kneaded with a thermoplastic resin molding material, and then molded into an arbitrary desired shape, such as a film, by a known method such as extrusion molding, injection molding, or compression molding, to obtain a heat ray shielding resin molded product having high weather resistance. By applying to, for example, automobiles, building windows, carports, arcades, etc., the heat ray shielding resin molded product thus obtained, which has high weather resistance, blocks incoming solar energy, reducing a cooling load and people's feeling of heat, and also helps save energy, making it highly environmentally useful.

### Description of Embodiments

The dispersion powder according to the present invention is composed of composite tungsten oxide fine particles having a hexagonal crystal structure and represented by a general formula MxWOy (wherein M element is one or more elements selected from the group 1, group 2, and group 13 elements in the periodic table, satisfying 0.1 ≤ x ≤ 1.0, 2.0 ≤ y < 4.0), which are surface-modified with an acrylic dispersant, and a heat ray shielding resin molded product and a heat ray shielding laminate according to the present invention are produced using the dispersion powder.

The dispersion powder, the heat ray shielding resin molded product having high weather resistance, and the heat ray shielding laminate having high weather resistance according to the present invention will be described below in the following order.
1) Composite tungsten oxide fine particles used in dispersion powder
2) Method for producing composite tungsten oxide fine particles used in dispersion powder
3) Dispersant used in dispersion powder
4) Method for producing composite tungsten oxide fine particle dispersion liquid used in dispersion powder
5) Method for producing dispersion powder
6) Thermoplastic resin used in heat ray shielding resin molded product
7) Method for dispersing dispersion powder in thermoplastic resin
8) Method for producing heat ray shielding resin molded product and heat ray shielding laminate

### 1) Composite tungsten oxide fine particles used in dispersion powder

The composite tungsten oxide fine particles used as a heat ray shielding material in the dispersion powder according to the present invention largely absorb light in a near infrared region, particularly in the vicinity of 1000 nm in wavelength, and therefore a transmitted color tone is often bluish, and a particle size of the near-infrared ray shielding material can be appropriately selected depending on the purpose of use.

First, when used in applications where transparency must be maintained, the composite tungsten oxide fine particles preferably have a dispersed particle size of 800 nm or less. This is because the particles having a dispersed particle size smaller than 800 nm do not completely block light due to scattering, and can maintain visibility in a visible light region while efficiently maintaining transparency. Particularly, when emphasis is placed on transparency in the visible light region, it is preferable to further consider scattering by particles.

Also, when emphasis is placed on reducing scattering by particles, the dispersed particle size of the composite tungsten oxide fine particles is 200 nm or less, preferably 100 nm or less. This is because in the case of the smaller dispersed particle size of the dispersed particles, scattering of light in the visible light region with a wavelength of 400 nm to 780 nm due to geometric scattering or Mie scattering is reduced. That is, this is because as a result of the reduced scattering of light, it is possible to avoid the near-heat ray shielding resin molded product becoming like frosted glass, and possible to avoid not obtaining clear transparency. That is, this is because when the dispersed particle size of the dispersed particles is 200 nm or less, the geometric scattering or Mie scattering is reduced, resulting in Rayleigh scattering. In the Rayleigh scattering region, scattered light is proportional to the sixth power of the particle size, so scattering is reduced as the dispersed particle size becomes smaller, improving transparency. Further, when the dispersed particle size is 100 nm or less, scattered light is extremely reduced, which is preferable. From the viewpoint of avoiding light scattering, it is preferable that the dispersed particle size is small, and when the dispersed particle size is 1 nm or more, industrial production is facilitated.

The composite tungsten oxide fine particles are represented by the general formula MxWOy (wherein M element is one or more elements selected from the group 1, group 2, and group 13 elements in the periodic table, satisfying 0.1 ≤ x ≤ 1.0, 2.0 ≤ y < 4.0), and have a hexagonal crystal structure. Preferably, the M element is at least one selected from the group consisting of Cs, Rb, K, Tl, and Ba. An amount x of the added M element is preferably 0.1 or more and 1.0 or less, and more preferably around 0.33. This is because the value theoretically calculated from the hexagonal crystal structure is 0.33, and preferable optical properties can be obtained with an added amount around this value. The range of y is preferably 2.0 ≤ y < 4.0.

Typical examples of the composite tungsten oxide material include Cs_{0.33}WO₃, Rb_{0.33}WO₃, K_{0.33}WO₃, and Ba_{0.33}WO₃ . As long as x and y fall within the above ranges, useful near-infrared shielding properties can be obtained.

### 2) Method for producing composite tungsten oxide fine particles used in dispersion powder

### a) Thermochemical production method

The composite tungsten oxide fine particles can be obtained by heat-treating a starting tungsten compound in an inert gas atmosphere or a reducing gas atmosphere, followed by a mild oxidation treatment.

The tungsten compound starting material is preferably at least one selected from tungsten trioxide powder, tungsten dioxide powder, tungsten oxide hydrate, tungsten hexachloride powder, and ammonium tungstate powder, or tungsten oxide hydrate powder obtained by dissolving tungsten hexachloride in alcohol and then drying, or tungsten oxide hydrate powder obtained by dissolving tungsten hexachloride in alcohol, adding water to precipitate it and then drying it, or tungsten compound powder obtained by drying an aqueous solution of ammonium tungstate, and metallic tungsten powder.

Here, when producing composite tungsten oxide fine particles, since the starting materials are in the form of a solution, the elements can be easily mixed uniformly, and from this viewpoint it is more preferable to use an aqueous solution of ammonium tungstate or a solution of tungsten hexachloride. These raw materials are used and heat-treated in an inert gas atmosphere or a reducing gas atmosphere to obtain composite tungsten oxide fine particles having the particle size described above.

Further, when producing the composite tungsten oxide fine particles, the M element is further added in the form of a simple element or a compound to the starting tungsten compound material to form a starting material for the composite tungsten compound.

Here, in order to prepare the starting material in which each component is uniformly mixed at a molecular level, it is preferable to mix each raw material in the form of a solution. Therefore, the starting material of the tungsten compound containing element M is preferably soluble in a solvent such as water or an organic solvent. Examples of the M element-containing salt include tungstates, chlorides, nitrates, sulfates, oxalates, oxides, carbonates, hydroxides, etc., but are not limited thereto, and any salt that can be made into a solution may be used.

The heat treatment in the inert atmosphere is preferably performed at 650°C or higher. The starting material heat-treated at 650°C or higher has sufficient near-infrared absorbing power and is effective as heat ray shielding fine particles. As the inert gas, an inert gas such as Ar or N₂ can be used.

On the other hand, as for the conditions for the heat treatment in a reducing atmosphere, it is preferable to first heat-treat the starting material in a reducing gas atmosphere at 300°C or more and 1000°C or less, and then heat-treat it in an inert gas atmosphere at a temperature of 650°C or more and 1200°C or less. The reducing gas used here is not particularly limited, but H₂ is preferable. When H₂ is used as the reducing gas, the composition of the reducing atmosphere is preferably a mixture of an inert gas such as Ar or N₂ mixed with H₂ at a volume ratio of 0.1% or more, more preferably 0.2% or more. When the volume ratio of H₂ is 0.1% or more, reduction can be efficiently carried out.

The composite tungsten oxide fine particles exhibiting the near-infrared shielding function of the present embodiment are surface-treated with at least one compound selected from the group consisting of silane compounds, titanium compounds, aluminum compounds, and zirconia compounds, and the surfaces of the fine particles are preferably coated with a compound containing one or more of Si, Ti, Zr and Al, as this improves weather resistance.

### b) Plasma-based production method

The method for producing composite tungsten oxide fine particles using a plasma method will be explained item by item.

### (I) Preparation of raw material

As the starting material, a raw material mixture of a tungsten compound and an M element compound, or a composite tungsten oxide precursor represented by the general formula MxWOy can be used. As the tungsten compound and the M element compound, the same materials as those explained in the thermochemical production method can be suitably used.

When preparing the raw material mixture of the tungsten compound and the M element compound as a starting material, the raw materials are blended and mixed so that the ratio of M element to tungsten in the raw material mixture of the tungsten compound and the M element compound is equal to the ratio of x to y in the general formula of a target composite tungsten oxide.

Further, when the composite tungsten oxide precursor represented by the general formula MxWOy is used as a starting material, it is preferable to satisfy 0.001 ≤ x ≤ 1.0 and 2.0 < y. The composite tungsten oxide precursor represented by the general formula MxWOy can be synthesized, for example, by the thermochemical production method described above.

### (II) Plasma equipment and reaction conditions

Examples of plasma used to produce composite tungsten oxide fine particles are as follows: any of DC arc plasma, high frequency plasma, microwave plasma, low frequency AC plasma, or a combination of these, or those obtained by electrical methods that apply a magnetic field to DC plasma, those obtained by high-power lasers, and those obtained by high-power electron beams or ion beams can be used. Hereinafter, a hybrid plasma reactor that combines a DC plasma device and a high-frequency plasma device will be described as an example.

A mixed gas of an inert gas and oxygen gas can be used as a carrier gas for carrying the starting material in the reaction step. The plasma can be generated in an atmosphere of, for example, an inert gas alone or a mixed gas of the inert gas and hydrogen gas. According to the plasma method, for example, composite tungsten oxide fine particles having a single crystal phase can be produced.

The high frequency power source is not particularly limited, and for example, a high frequency power source having a frequency of about 4 MHz and an output of 15 kW to 50 kW is used.

When thermal plasma is used, a thermal plasma having a high temperature part of 10,000 K or more, more preferably 10,000 K or more and 25,000 K or less is used, and particularly, plasma that can control a particle generation time is used.

### (III) Production of composite tungsten oxide particles using plasma

The reaction system is evacuated using a vacuum exhaust device. The degree of vacuum required for this process is not particularly limited, and for example, a vacuum of approximately 0.1 Pa can be achieved. After evacuating the reaction system, the reaction system is filled with argon gas. For example, it is preferable to set inside of the reaction system in an argon gas flow system of 1 atmosphere.

Thereafter, plasma gas is supplied into a reaction vessel. The plasma gas is not particularly limited, and may be any gas selected from, for example, argon gas, mixed gas of argon and helium (Ar-He mixed gas), mixed gas of argon and nitrogen (Ar-N₂ mixed gas), neon, helium, and xenon.

The flow rate of the plasma gas to be supplied is not particularly limited, and may be, for example, 3 L/min to 30 L/min, preferably 3 L/min to 15 L/min.

On the other hand, outside the plasma region, sheath gas is supplied from a sheath gas inlet, for generating high frequency plasma and protecting a quartz tube. The type of the sheath gas or a supply rate is not particularly limited, and for example, argon gas is flowed at 20 L/min to 50 L/min and hydrogen gas is flowed at 1 L/min to 5 L/min to generate high-frequency plasma.

After the hybrid plasma is generated, the raw material is introduced from a raw material powder carrier gas supply port using a carrier gas. The carrier gas is not particularly limited, and for example, mixed gas consisting of argon gas and oxygen gas is used, at 1 L/min to 8 L/min for argon gas and at 0.001 L/min to 0.8 L/min for oxygen gas respectively. The supply rate of the starting material from the raw material powder carrier gas supply port is preferably, for example, 1 g/min to 50 g/min, more preferably 1 g/min to 20 g/min.

The starting material supplied into the plasma is instantly vaporized in the plasma and undergoes a condensation process to produce composite tungsten oxide fine particles having an average primary particle size of 100 nm or less. The particle size of the composite tungsten oxide fine particles can be easily controlled by plasma output, plasma flow rate, an amount of supplied raw material powder, and the like.

In order to obtain a desired near-infrared shielding resin molded product using the composite tungsten oxide fine particles produced by the thermochemical production method or the production method using plasma described above, it is desirable that the powder color of the composite tungsten oxide fine particles satisfy conditions such that L* is 25 to 80, a* is -10 to 10, and b* is -15 to 15 in the L*a*b* color system (JIS Z 8729) recommended by the International Commission on Illumination (CIE).

By using the above-described composite tungsten oxide fine particles, desired optical properties can be obtained as a near-infrared shielding resin sheet material.

### 3) Dispersant used in dispersion powder

The dispersant is used for the purpose of hydrophobizing the surfaces of the composite tungsten oxide particles. The dispersant can be selected according to a dispersion system, which is a combination of composite tungsten oxide particles, a dispersion medium, a coating resin material, etc., and an acrylic dispersant is preferable, and one having an acidic functional group as a functional group is more preferable. Examples include a hydroxy group, a carboxyl group, a phosphate group, a sulfo group, etc. A carboxyl group is most preferable.

An average molecular weight of the dispersant is 15,000 or more and 80,000 or less, and more preferably 20,000 or more and 40,000 or less. When the average molecular weight is higher than 15,000, a dispersion stability is good and aggregation of the composite tungsten oxide fine particles is suppressed. When the average molecular weight is lower than 80,000, the composite tungsten oxide fine particles can be easily pulverized.

An acid value of the dispersant is preferably 3.0 mgKOH/g or more and 20.0 mgKOH/g or less, and more preferably 5.0 mgKOH/g or more and 15.0 mgKOH/g or less. When the acid value is higher than 3.0 mgKOH/g, the dispersibility of the composite tungsten oxide fine particles is good. When the acid value is 20.0 mgKOH/g or less, the compatibility of the dispersant with the organic solvent is good, and the dispersibility of the composite tungsten oxide fine particles is good.

A glass transition temperature of the dispersant (the temperature at which it softens when heated above a certain temperature) is preferably 90°C or higher and 150°C or lower. When the glass transition temperature is 90°C or higher, the dispersion powder can be melt-kneaded into a resin within a temperature range of 250°C to 300°C.

It is found that by adjusting an amount of acrylic dispersant having an acidic functional group as a functional group added to the composite tungsten oxide fine particles, the weight ratio of the dispersant to the composite tungsten oxide fine particles is set to a range of 0.3 ≤ (weight of dispersant / weight of composite tungsten oxide) < 3.0, more preferably, a range of 0.3 ≤ (weight of dispersant / weight of composite tungsten oxide) ≤ 1.0, 0.3 ≤ (weight of dispersant / weight of composite tungsten oxide) ≤ 0.8, and even more preferably, a range of 0.3 ≤ (weight of dispersant / weight of composite tungsten oxide) ≤ 0.5, then, a heat ray shielding resin molded product having high weather resistance and a heat ray shielding laminate having high weather resistance can be obtained. As a result, both of the following viewpoints are achieved: the viewpoint of obtaining a dispersion powder with a large concentration adjustment margin by significantly increasing the content of heat ray shielding fine particles in the dispersion powder, and the viewpoint of obtaining a heat ray shielding resin molded product having high weather resistance and a heat ray shielding laminate having high weather resistance.

This is considered to be because, in the composite tungsten oxide fine particles according to the present invention, which have a large crystallite size, damage to a crystal structure is reduced and high weather resistance is ensured due to the effect that loss of constituent elements is unlikely to occur even when mixed and pulverized during the production of a dispersion liquid, as described below. On the other hand, the present inventors have found that when the weight ratio of the dispersant to the composite tungsten oxide fine particles exceeds 3.0, the weather resistance becomes low. The low weather resistance is considered to be due to a chemical reaction occurring between the dispersant and the composite tungsten oxide fine particles.

### 4) Method for producing composite tungsten oxide fine particle dispersion liquid used for dispersion powder

In the production process of the composite tungsten oxide fine particle dispersion liquid used for producing the dispersion powder, dispersion liquid can be produced by mixing the composite tungsten oxide fine particles, a dispersant, and a dispersion medium. From the viewpoint of reducing the dispersed particle size of the composite tungsten oxide fine particles and dispersing them uniformly in the dispersion liquid, it is preferable to perform a pulverization treatment of the composite tungsten oxide fine particles during mixing.

The dispersion medium may be any medium that can disperse the composite tungsten oxide particles and dispersant described above to form a dispersion liquid, and various organic compounds can be used. For example, one or more organic solvents selected from aromatic hydrocarbons such as toluene and xylene can be suitably used.

The mixing means used when mixing and pulverizing the composite tungsten oxide fine particles, dispersant, and dispersion medium is not particularly limited, and may be one or more selected from, for example, a bead mill, a ball mill, a sand mill, a paint shaker, an ultrasonic homogenizer, and the like. Particularly, as a mixing means, it is more preferable to use a media stirring mill such as a bead mill, ball mill, sand mill, or paint shaker, which uses a medium such as beads, balls, or Ottawa sand. This is because the use of the media stirring mill allows the composite tungsten oxide fine particles to be dispersed to a desired particle size in a particularly short time, which is preferable from the viewpoints of productivity and suppressing the inclusion of impurities.

Here, from the viewpoint of allowing the composite tungsten oxide fine particles to exhibit transparency and high weather resistance, it is preferable to pulverize the composite tungsten oxide to a dispersed particle size such that the crystallite size of the composite tungsten oxide is 15 nm or more and 80 nm or less, more preferably 20 nm or more and 40 nm or less, and even more preferably 30 nm or more and 40 nm or less. When the crystallite size of the composite tungsten oxide fine particles is within the above range, and when the weight ratio of the dispersant to the composite tungsten oxide fine particles is within the above specified range, the composite tungsten oxide fine particles exhibit both transparency and high weather resistance.

In order to achieve the above object, the concentration of the composite tungsten oxide particles in the organic solvent, which is the dispersion medium, is preferably 5 to 50 mass %. When the concentration of the composite tungsten oxide fine particles is 5 mass % or more, an amount of organic solvent to be removed in the subsequent step can be reduced, and a production cost can be reduced. Further, when the concentration of the composite tungsten oxide fine particles is 50 mass % or less, the fine particles will not aggregate and the viscosity of the liquid will not increase, making the liquid easier to handle.

### 5) Method for producing dispersion powder

A drying step for obtaining the dispersion powder according to the present invention is a step performed to remove an organic solvent from the dispersion liquid. In this step, the obtained dispersion liquid is preferably dried under reduced pressure. Specifically, the dispersion liquid is dried under reduced pressure using a vacuum drying device while being stirred, to separate the dispersion powder from an organic solvent component. An apparatus used for drying under reduced pressure may be a vacuum stirring type dryer. However, the apparatus is not particularly limited as long as it has the above function. The pressure of the reduced pressure in the drying step is selected appropriately.

The use of the reduced pressure drying method is preferable because it improves the efficiency of removing the organic solvent and also prevents the dispersion powder from being exposed to a high temperature for a long period of time, preventing aggregation of the dispersed fine particles. Further, productivity is improved, and the evaporated organic solvent can be easily recovered, which is also preferable from an environmental perspective.

### 6) Thermoplastic resin used in heat ray shielding resin molded product

The thermoplastic resin used in the present invention is not particularly limited as long as it is a transparent thermoplastic resin having a high light transmittance in a visible light region, and for example, when molded into a plate-like product having a thickness of 3 mm, the thermoplastic resin is the one having a visible light transmittance of 50% or more as specified in JIS R 3106 and a haze of 30% or less as specified in JIS K7105.

Specifically, examples of the resin include acrylic resin, polycarbonate resin, polyetherimide resin, polyester resin, polystyrene resin, polyethersulfone resin, fluorine-based resin, and polyolefin resin. When the heat ray shielding transparent resin substrate is intended to be used as a window material for various buildings or vehicles, acrylic resin, polycarbonate-based resin, polyetherimide resin, and fluorine-based resin are more preferable in consideration of transparency, impact resistance, weather resistance, and the like.

The polycarbonate resin is preferably an aromatic polycarbonate, such as a polymer obtained by a known method such as interfacial polymerization, melt polymerization, or solid-state polymerization from one or more dihydric phenol compounds typified by 2,2-bis (4-hydroxyphenyl)propane and 2,2-bis (3,5-dibromo-4-hydroxyphenyl) propane and a carbonate precursor typified by phosgene or diphenyl carbonate.

Examples of acrylic resins include polymers or copolymers that use methyl methacrylate, ethyl methacrylate, propyl methacrylate, or butyl methacrylate as a main raw material, and, if necessary, use an acrylic acid ester having an alkyl group having 1 to 8 carbon atoms, vinyl acetate, styrene, acrylonitrile, methacrylonitrile, and the like as a copolymerization component. Further, an acrylic resin polymerized in multiple stages can also be used.

Examples of the fluorine-based resin include polyethylene fluoride, polyethylene difluoride, polyethylene tetrafluoride, ethylene-ethylene difluoride copolymer, ethylene-ethylene tetrafluoride copolymer, and ethylene tetrafluorideperfluoroalkoxyethylene copolymer.

### 7) Method for dispersing dispersion powder in thermoplastic resin

The method for dispersing the dispersion powder in the thermoplastic resin can be arbitrarily selected as long as the composite tungsten oxide fine particles contained in the dispersion powder can be uniformly dispersed in the resin. For example, first, a dispersion liquid is prepared by dispersing the dispersion powder in a solvent using a method such as a bead mill, a ball mill, a sand mill, or ultrasonic dispersion. Next, the dispersion liquid, dispersant, thermoplastic resin powder or pellets, and, if necessary, other additives are uniformly melt-mixed using a mixer such as a ribbon blender, tumbler, Nauta mixer, Henschel mixer, super mixer, or planetary mixer, or a kneader such as a Banbury mixer, kneader, roll, kneader-ruder, single-screw extruder, or twin-screw extruder, while removing the solvent from the dispersion liquid, to prepare a mixture in which the composite tungsten oxide fine particles are uniformly dispersed in the thermoplastic resin. The temperature during kneading is maintained at a temperature at which the used thermoplastic resin does not decompose.

Alternatively, the dispersion powder may be uniformly melt-mixed with powder or pellets of a thermoplastic resin, and with other additive as required, to prepare a mixture in which the composite tungsten oxide fine particles are uniformly dispersed in the thermoplastic resin. Alternatively, it is acceptable to use a method of uniformly melt-mixing the dispersion powder, thermoplastic resin powder or pellets, and, if necessary, other additive. The dispersion method is not limited to these methods as long as the composite tungsten oxide particles are uniformly dispersed in the thermoplastic resin.

### 8) Method for producing heat ray shielding resin molded product and heat ray shielding laminate

Next, the heat ray shielding resin molded product of this embodiment is obtained by diluting and kneading the dispersion powder using a thermoplastic resin molding material, and molding the mixture into a predetermined shape.

In this embodiment, due to use of the dispersion powder, kneading into the thermoplastic resin can be easy, and therefore the kneading process during molding of the heat ray shielding resin molded product can be completed in a short time. As a result, the dispersion powder itself is subject to very little thermal degradation, and the composite tungsten oxide fine particles are sufficiently dispersed in the near-heat ray shielding resin molded product, ensuring good visible light transmittance and exhibiting excellent heat ray shielding properties.

The heat ray shielding resin molded product can be molded into an arbitrary shape as required, and can be molded into a flat or curved shape. The thickness of the heat ray shielding resin molded product can be adjusted to an arbitrary thickness as required. Further, a resin sheet formed into a flat shape can be formed into an arbitrary desired shape, such as a spherical shape, by post-processing.

The heat ray shielding resin molded product can be molded by an arbitrary method such as injection molding, extrusion molding, compression molding, or rotational molding. Particularly, a method of obtaining a molded product by injection molding and a method of obtaining a molded product by extrusion molding are preferably employed. A method for obtaining a plate-shaped or film-shaped molded product by extrusion molding is to extrude a molten thermoplastic resin using an extruder such as a T-die, and take it up while cooling it with a cooling roll.

The heat ray shielding resin molded product can be used by itself as a structural material such as window glass or an arcade, or can be laminated by an arbitrary method to another molded product such as inorganic glass, resin glass or a resin film to form an integrated heat ray shielding laminate, which can be used as a structural material. For example, a heat ray shielding resin molded product previously formed into a film can be laminated and integrated with inorganic glass by thermal lamination to obtain a heat ray shielding laminate having heat ray shielding and shatter-preventing functions.

It is also possible to obtain a heat-ray shielding laminate by integrally laminating the heat-ray shielding resin molded product with another molded product at the same time by a thermal lamination method, a co-extrusion method, a press molding method, an injection molding method and the like. The heat ray shielding laminate can be used as a more useful structural material by effectively utilizing the advantages of each molded product and complementing each other's disadvantages.

As described above in detail, by using the dispersion powder consisting of composite tungsten oxide fine particles and the dispersant as heat ray shielding components, the heat ray shielding resin molded product and the heat ray shielding laminate that have excellent weather resistance, high transmittance in the visible light region, and excellent heat ray shielding function, can be provided without using an expensive physical film-forming method or complicated process.

### Examples

The present invention will be specifically explained using examples, but the present invention is not limited to the following examples.

The visible light transmittance, 820 nm wavelength transmittance, 1000 nm wavelength transmittance, and 1500 nm wavelength transmittance of the produced heat ray shielding resin molded product before and after a weather resistance test were measured using a spectrophotometer UH-4150 manufactured by Hitachi, Ltd. The Δ transmittance (= transmittance after weather resistance test - transmittance before weather resistance test) at each wavelength is an index showing a weather resistance performance.

### [Example 1]

17.7 g of Cs₂CO₃ was dissolved in 39.9 g of water, and this was added to 82.3 g of H₂WO₄, followed by drying in a vacuum dryer while stirring. The obtained dry powder was fired at 550°C for 1 hour in a 5% H₂ gas atmosphere with N₂ gas as a carrier, and then fired at 800°C for 1 hour in a N₂ gas atmosphere to obtain fine particles a. Chemical analysis of the fine particles a revealed that the composition was Cs_{0.33}WO_{2.45}, and the result of powder X-ray diffraction revealed that the fine particles a were hexagonal Cs_{0.3}WO₃.

Next, 15% by weight of the fine particles a, 6% by weight of an acrylic dispersant having an acidic functional group as a functional group, and 79% by weight of toluene were weighed out, and the mixture was pulverized and dispersed for 6 hours in a paint shaker containing 0.3 mm diameter ZrO₂ beads to prepare a composite tungsten oxide fine particle dispersion liquid (liquid A). Here, the crystallite size of the composite tungsten oxide fine particles in the liquid A was measured and found to be 31.8 nm. Thereafter, toluene was removed from the liquid A using a large vacuum crusher, to obtain a composite tungsten oxide fine particle dispersion powder (dispersion powder A).

The obtained dispersion powder A was added to a polycarbonate resin powder, which is a thermoplastic resin, so that the concentration of the composite tungsten oxide fine particles was 0.08% by weight, and the mixture was uniformly mixed in a blender. The mixture was then melt-kneaded in a twin-screw extruder and extruded to a thickness of 1 mm using a T-die. Thereafter, the resin was heated and pressed to obtain a heat ray shielding resin molded product having a thickness of 0.8 mm, in which the composite tungsten oxide fine particles were uniformly dispersed throughout the resin.

This heat ray shielding resin molded product was subjected to an exposure test under xenon weather meter conditions (temperature 60°C, relative humidity 50% RH, irradiance 150 W/m², exposure time 200 hours). The optical properties were measured after the test. As shown in Table 1, when the visible light transmittance was 78.8%, Δ transmittance at a wavelength of 820 nm was 2.6%, Δ transmittance at a wavelength of 1000 nm was 1.5%, and Δ transmittance at a wavelength of 1500 nm was 1.3%.

### [Example 2]

A composite tungsten oxide fine particle dispersion powder (dispersion powder B) according to Example 2 was obtained in the same manner as in Example 1, except that the amount of the acrylic dispersant having an acidic functional group as a functional group was 7.5 wt % and the amount of toluene was 77.5 wt %. A heat ray shielding resin molded product according to Example 2 was prepared in the same manner as in Example 1, except that dispersion powder B was used, and an exposure test was performed under the same conditions as in Example 1 to evaluate the optical properties. The crystallite size of the composite tungsten oxide fine particles in the composite tungsten oxide fine particle dispersion liquid according to Example 2 was 32.6 nm. The optical properties of the heat ray shielding resin molded product of Example 2 after the exposure test were measured. As a result, as shown in Table 1, when the visible light transmittance was 78.1%, Δ transmittance at a wavelength of 820 nm was 2.5%, Δ transmittance at a wavelength of 1000 nm was 1.6%, and Δ transmittance at a wavelength of 1500 nm was 1.3%.

### [Example 3]

A composite tungsten oxide fine particle dispersion powder (dispersion powder C) according to Example 3 was obtained in the same manner as in Example 1, except that the amount of the acrylic dispersant having an acidic functional group as a functional group was 9.0 wt % and the amount of toluene was 76.0 wt %. A heat ray shielding resin molded product according to Example 3 was prepared in the same manner as in Example 1, except that the dispersion powder C was used, and the exposure test was performed under the same conditions as in Example 1 to evaluate the optical properties. The crystallite size of the composite tungsten oxide fine particles in the composite tungsten oxide fine particle dispersion liquid according to Example 3 was 32.3 nm. The optical properties of the heat ray shielding resin molded product of Example 3 after the exposure test were measured. As a result, as shown in Table 1, when the visible light transmittance was 78.7%, Δ transmittance at a wavelength of 820 nm was 2.6%, Δ transmittance at a wavelength of 1000 nm was 1.6%, and Δ transmittance at a wavelength of 1500 nm was 1.3%.

### [Example 4]

A composite tungsten oxide fine particle dispersion powder (dispersion powder D) according to Example 4 was obtained in the same manner as in Example 1, except that the amount of the acrylic dispersant having an acidic functional group as a functional group was 12.0 wt % and the amount of toluene was 73.0 wt %. A heat ray shielding resin molded product according to Example 4 was prepared in the same manner as in Example 1, except that the dispersion powder D was used, and the exposure test was performed under the same conditions as in Example 1 to evaluate the optical properties. The crystallite size of the composite tungsten oxide fine particles in the composite tungsten oxide fine particle dispersion liquid according to Example 4 was 32.7 nm. The optical properties of the heat-ray shielding resin molded product of Example 4 after the exposure test were measured. As a result, as shown in Table 1, when the visible light transmittance was 78.9%, Δ transmittance at a wavelength of 820 nm was 2.8%, Δ transmittance at a wavelength of 1000 nm was 1.7%, and Δ transmittance at a wavelength of 1500 nm was 1.5%.

### [Example 5]

8.8 g of Cs₂CO₃ was dissolved in 16.5 g of water, and this was added to 50 g of H₂WO₄, followed by drying in a vacuum dryer while stirring. The obtained dried powder was fired at 570°C for 1 hour in a 5% H₂ gas atmosphere with N₂ gas as a carrier, then fired at 800°C for 1 hour in a 1% air atmosphere with N₂ gas as a carrier, and further fired at 820°C for 0.5 hours in an N₂ gas atmosphere to obtain fine particles b. Chemical analysis of the fine particles b revealed that the composition was Cs_{0.2}7WO_{2.86}, and the results of powder X-ray diffraction revealed that the fine particles b were hexagonal CS_{0.3}WO₃.

A composite tungsten oxide fine particle dispersion powder (dispersion powder E) according to Example 5 was obtained in the same manner as in Example 1, except that the fine particles b were used. Further, a heat ray shielding resin molded product according to Example 5 was prepared, and an exposure test was performed under the same conditions as in Example 1 to evaluate the optical properties. The crystallite size of the composite tungsten oxide fine particles in the composite tungsten oxide fine particle dispersion liquid according to Example 5 was 31.5 nm. The optical properties of the heat-ray shielding resin molded product of Example 5 after the exposure test were measured. As a result, as shown in Table 1, when the visible light transmittance was 80.0%, Δ transmittance at a wavelength of 820 nm was 2.9%, Δ transmittance at a wavelength of 1000 nm was 1.8%, and Δ transmittance at a wavelength of 1500 nm was 1.8%.

### [Example 6]

17.7 g of Cs₂CO₃ was dissolved in 39.9 g of water, and this was added to 82.3 g of H₂WO₄, followed by drying in a vacuum dryer while stirring to obtain dry powder a. A hybrid plasma reactor that combines a DC plasma device and a high-frequency plasma device was used, and a reaction system was evacuated to approximately 0.1 Pa (approximately 0.001 torr) using a vacuum exhaust device, and then completely replaced with argon gas to create a flow system at 1 atmosphere. Thereafter, argon gas was introduced through a plasma generating gas supply port at a rate of 8 L/min to generate DC plasma. At this time, DC power input was 6 kW. Further, Argon gas at 40 L/min and hydrogen gas at 3 L/min were spirally flowed from a sheath gas supply port along an inner wall of a water-cooled quartz tube as gases for generating high-frequency plasma and protecting the quartz tube, to generate high-frequency plasma. The high frequency power input was set to 45 kW. After generating the hybrid plasma in this manner, the obtained dry powder a was supplied into the plasma at a rate of 2 g/min from a raw material powder supplying device using a mixed gas of argon gas at 3 L/min and oxygen gas at 0.15 L/min as a carrier gas. As a result, the raw material was instantly vaporized, condensed in a plasma tail flame, and pulverized to obtain fine particles c. Chemical analysis of the fine particles c revealed that the composition was Cs_{0.31}WO_{3.21}, and powder X-ray diffraction revealed that the fine particles c were hexagonal Cs_{0.3}WO₃.

A composite tungsten oxide fine particle dispersion powder (dispersion powder F) according to Example 6 was obtained in the same manner as in Example 1, except that the fine particles c were used. Further, a heat ray shielding resin molded product according to Example 6 was prepared, and an exposure test was performed under the same conditions as in Example 1 to evaluate the optical properties. The crystallite size of the composite tungsten oxide fine particles in the composite tungsten oxide fine particle dispersion liquid according to Example 6 was 24.6 nm. The optical properties of the heat ray shielding resin molded product of Example 6 after the exposure test were measured. As a result, as shown in Table 1, when the visible light transmittance was 79.2%, Δ transmittance at a wavelength of 820 nm was 3.4%, Δ transmittance at a wavelength of 1000 nm was 2.0%, and Δ transmittance at a wavelength of 1500 nm was 1.9%.

### [Example 7]

Composite tungsten oxide fine particles d according to Example 7 were obtained in the same manner as in Example 1, except that K/W molar ratio of K₂CO₃ and H₂WO₄ was set to 0.33 when preparing the raw materials. Chemical analysis of fine particles d revealed that they had a composition of K_{0.33}WO_{2.45}, and powder X-ray diffraction revealed that they were hexagonal K_{0.3}WO₃. A composite tungsten oxide fine particle dispersion powder (dispersion powder G) according to Example 7 was obtained in the same manner as in Example 1, except that the fine particles d were used. A heat ray shielding resin molded product according to Example 7 was prepared in the same manner as in Example 1, except that dispersion powder G was used, and an exposure test was performed under the same conditions as in Example 1 to evaluate the optical properties. The crystallite size of the composite tungsten oxide fine particles in the composite tungsten oxide fine particle dispersion liquid according to Example 7 was 31.6 nm. The optical properties of the heat-ray shielding resin molded product of Example 7 after the exposure test were measured. As a result, as shown in Table 1, when the visible light transmittance was 78.0%, Δ transmittance at a wavelength of 820 nm was 3.4%, Δ transmittance at a wavelength of 1000 nm was 2.2%, and Δ transmittance at a wavelength of 1500 nm was 2.0%.

### [Example 8]

Composite tungsten oxide fine particles e according to Example 8 were obtained in the same manner as in Example 1, except that when preparing the raw materials, Rb₂CO₃ and H₂WO₄ were used in an Rb/W molar ratio of 0.33. Chemical analysis of the fine particles e revealed that the composition was Rb_{0.33}WO_{2.45}, and powder X-ray diffraction revealed that the fine particles e were hexagonal Rb_{0.33}WO₃. A composite tungsten oxide fine particle dispersion powder (dispersion powder H) according to Example 8 was obtained in the same manner as in Example 1, except that the fine particles e were used. A heat ray shielding resin molded product according to Example 8 was prepared in the same manner as in Example 1, except that dispersion powder H was used, and an exposure test was performed under the same conditions as in Example 1 to evaluate the optical properties. The crystallite size of the composite tungsten oxide fine particles in the composite tungsten oxide fine particle dispersion liquid according to Example 8 was 32.2 nm. The optical properties of the heat ray shielding resin molded product of Example 8 after the exposure test were measured. As a result, as shown in Table 1, when the visible light transmittance was 79.9%, Δ transmittance at a wavelength of 820 nm was 2.9%, Δ transmittance at a wavelength of 1000 nm was 2.1%, and Δ transmittance at a wavelength of 1500 nm was 2.0%.

### [Example 9]

Composite tungsten oxide fine particles g according to Example 9 were obtained in the same manner as in Example 1, except that when preparing the raw materials, Tl(NO₃)₃3H₂O and H₂WO₄ were mixed at a T1/W molar ratio of 0.33. Chemical analysis of the fine particles g revealed that the composition was Tl_{0.33}WO_{2.45}, and powder X-ray diffraction revealed that the fine particles g were hexagonal Tl_{0.3} WO₃. A composite tungsten oxide fine particle dispersion powder (dispersion powder I) according to Example 9 was obtained in the same manner as in Example 1, except that the fine particles g were used. A heat ray shielding resin molded product according to Example 9 was prepared in the same manner as in Example 1, except that the dispersion powder I was used, and an exposure test was performed under the same conditions as in Example 1 to evaluate the optical properties. The crystallite size of the composite tungsten oxide fine particles in the composite tungsten oxide fine particle dispersion liquid according to Example 9 was 32.6 nm. The optical properties of the heat ray shielding resin molded product of Example 9 after the exposure test were measured. As a result, as shown in Table 1, when the visible light transmittance was 79.4%, Δ transmittance at a wavelength of 820 nm was 3.0%, Δ transmittance at a wavelength of 1000 nm was 2.2%, and Δ transmittance at a wavelength of 1500 nm was 2.0%.

### [Example 10]

Composite tungsten oxide fine particles h according to Example 10 were obtained in the same manner as in Example 1, except that when preparing the raw materials, BaCO₃ and H₂WO₄ were used in a Ba/W molar ratio of 0.33. Chemical analysis of the fine particles h revealed that they had a composition of Ba_{0.33}WO_{2.45}, and powder X-ray diffraction revealed that they were hexagonal Ba_{0.3}WO₃. A composite tungsten oxide fine particle dispersion powder (dispersion powder J) according to Example 10 was obtained in the same manner as in Example 1, except that the fine particles h were used. A heat ray shielding resin molded product according to Example 10 was prepared in the same manner as in Example 1, except that the dispersion powder J was used, and an exposure test was performed under the same conditions as in Example 1 to evaluate the optical properties. The crystallite size of the composite tungsten oxide fine particles in the composite tungsten oxide fine particle dispersion liquid according to Example 10 was 32.5 nm. The optical properties of the heat ray shielding resin molded product of Example 10 after the exposure test were measured. As a result, as shown in Table 1, when the visible light transmittance was 78.0%, Δ transmittance at a wavelength of 820 nm was 3.7%, Δ transmittance at a wavelength of 1000 nm was 2.6%, and Δ transmittance at a wavelength of 1500 nm was 2.0%.

### [Example 11]

A heat ray shielding resin molded product according to Example 11 was obtained in the same manner as in Example 1, except that an acrylic resin was used as the thermoplastic resin. Thereafter, the optical properties were evaluated by exposure under the same conditions as in Example 1. As shown in Table 1, when the visible light transmittance was 80.8%, Δ transmittance at a wavelength of 820 nm was 3.4%, Δ transmittance at a wavelength of 1000 nm was 2.5%, and Δ transmittance at a wavelength of 1500 nm was 2.0%.

### [Example 12]

A composite tungsten oxide fine particle dispersion powder (dispersion powder K) according to Example 12 was obtained in the same manner as in Example 1, except that the acrylic dispersant having an acidic functional group as the functional group was 15.0 wt % and the toluene was 70.0 wt %. A heat ray shielding resin molded product of Example 12 was prepared in the same manner as in Example 1, except that the dispersion powder K was used, and an exposure test was performed under the same conditions as in Example 1 to evaluate the optical properties. The crystallite size of the composite tungsten oxide fine particles in the composite tungsten oxide fine particle dispersion liquid according to Example 12 was 32.2 nm. The optical properties of the heat ray shielding resin molded product of Example 12 after the exposure test were measured. As a result, as shown in Table 1, when the visible light transmittance was 79.1%, Δ transmittance at a wavelength of 820 nm was 3.7%, Δ transmittance at a wavelength of 1000 nm was 2.2%, and Δ transmittance at a wavelength of 1500 nm was 1.9%.

### [Example 13]

A composite tungsten oxide fine particle dispersion powder (dispersion powder L) according to Example 13 was obtained in the same manner as in Example 1, except that the amount of the acrylic dispersant having an acidic functional group as the functional group was 4.5% by weight and the amount of toluene was 80.5% by weight. A heat ray shielding resin molded product of Example 13 was prepared in the same manner as in Example 1, except that the dispersion powder L was used, and an exposure test was performed under the same conditions as in Example 1 to evaluate the optical properties. The crystallite size of the composite tungsten oxide fine particles in the composite tungsten oxide fine particle dispersion liquid according to Example 13 was 32.2 nm. The optical properties of the heat ray shielding resin molded product of Example 13 after the exposure test were measured. As a result, as shown in Table 1, when the visible light transmittance was 78.0%, Δ transmittance at a wavelength of 820 nm was 2.3%, Δ transmittance at a wavelength of 1000 nm was 1.4%, and Δ transmittance at a wavelength of 1500 nm was 1.3%.

### [Example 14]

A heat ray shielding resin molded product according to Example 14 was obtained in the same manner as in Example 1, except that the fine particles a were crushed and dispersed for 20 hours using a paint shaker. Thereafter, an exposure test was performed under the same conditions as in Example 1 to evaluate the optical properties. The crystallite size of the composite tungsten oxide fine particles in the composite tungsten oxide fine particle dispersion liquid according to Example 14 was 15.0 nm. The optical properties of the heat ray shielding resin molded product of Example 14 after the exposure test were measured. As a result, as shown in Table 1, when the visible light transmittance was 80.3%, Δ transmittance at a wavelength of 820 nm was 3.8%, Δ transmittance at a wavelength of 1000 nm was 2.7%, and Δ transmittance at a wavelength of 1500 nm was 2.1%.

### [Example 15]

A heat ray shielding resin molded product according to Example 15 was obtained in the same manner as in Example 1, except that the fine particles a were pulverized and dispersed for 1 hour using a paint shaker. Thereafter, an exposure test was performed under the same conditions as in Example 1 to evaluate the optical properties. The crystallite size of the composite tungsten oxide fine particles in the composite tungsten oxide fine particle dispersion liquid according to Example 15 was 80 nm. The optical properties of the heat-ray shielding resin molded product of Example 15 after the exposure test were measured. As a result, as shown in Table 1, when the visible light transmittance was 79.8%, Δ transmittance at a wavelength of 820 nm was 2.0%, Δ transmittance at a wavelength of 1000 nm was 1.0%, and Δ transmittance at a wavelength of 1500 nm was 1.0%.

### [Comparative Example 1]

A composite tungsten oxide fine particle dispersion powder (dispersion powder M) according to Comparative Example 1 was obtained in the same manner as in Example 1, except that the acrylic dispersant having an acidic functional group as a functional group was 45.0% by weight and the toluene was 35.0% by weight. A heat ray shielding resin molded product according to Comparative Example 1 was prepared in the same manner as in Example 1, except that the dispersion powder M was used, and an exposure test was performed under the same conditions as in Example 1 to evaluate the optical properties. The crystallite size of the composite tungsten oxide fine particles in the composite tungsten oxide fine particle dispersion liquid according to Comparative Example 1 was 32.9 nm. The optical properties of the heat-ray shielding resin molded product according to Comparative Example 1 after the exposure test were measured. As shown in Table 1, when the visible light transmittance was 79.2%, Δ transmittance at a wavelength of 820 nm was 5.6%, Δ transmittance at a wavelength of 1000 nm was 3.1%, and Δ transmittance at a wavelength of 1500 nm was 2.6%.

### [Comparative Example 2]

A composite tungsten oxide fine particle dispersion liquid according to Comparative Example 1 was prepared in the same manner as in Example 1, except that the amount of the acrylic dispersant having an acidic functional group as a functional group was 3.0 wt % and the amount of toluene was 82.0 wt %. However, the crystallite size of the composite tungsten oxide fine particles in the composite tungsten oxide fine particle dispersion liquid according to Comparative Example 2 was 96.3 nm, and since pulverization did not progress to a desired particle size at the stage of preparing the dispersion liquid, the test was terminated.

### [Comparative Example 3]

An attempt was made to produce a heat ray shielding resin molded product according to Example 15 in the same manner as in Example 1, except that the fine particles a were pulverized and dispersed for 25 hours using a paint shaker. However, due to gelation of the dispersion liquid, the test was terminated without proceeding to the production of a heat ray shielding resin molded product and the evaluation of its optical properties.

### [Evaluation]

According to the results shown in Table 1, it was confirmed that the heat ray shielding resin molded product of Examples 1 to 15 after the weather resistance test had a visible light transmittance of 78.0% or more, Δ transmittance of 3.8% or less at a wavelength of 820 nm, Δ transmittance of 2.7% or less at a wavelength of 1000 nm, and Δ transmittance of 2.1% or less at a wavelength of 1500 nm. On the other hand, the heat ray shielding resin molded product of Comparative Example 1 had a visible light transmittance of 78.0% or more, and Δ transmittance of exceeding 3.8% at a wavelength of 820 nm, Δ transmittance of exceeding 2.7% at a wavelength of 1000 nm, and Δ transmittance of exceeding 2.1% at a wavelength of 1500 nm, and it was confirmed that the Δ transmittance in the near-infrared region was high. Further, in Comparative Example 2, pulverization did not progress to a desired particle size in a dispersant liquid preparation stage. Further, in Comparative Example 3, gelation occurred during the dispersion liquid preparation stage, and the heat ray shielding resin molded product was not prepared and its optical properties were not evaluated.

**[Table 1]**

| | Composition of dispersion liquid | | | | Heat ray shielding resin molded product | | | Optical properties(%) | | | |
|---|---|---|---|---|---|---|---|---|---|---|---|
| | Composite tungsten oxide fine particles | | | Concentration of dispersant (wt%) | Thermoplastic resin | Concentration of fine particles (wt%) | Thickness (mm) | Visible light trans. | 820nm Δ trans. | 1000nm Δ trans. | 1500nm Δ trans. |
| | Composition | Concentration (wt%) | Crystallite size (nm) | | | | | | | | |
| Example 1 | Cs_{0.33}WO_{2.45} | 15 | 31.8 | 6.0 | Polycarbonate | 0.08 | 0.8 | 78.8 | 2.6 | 1.5 | 1.3 |
| Example 2 | Cs_{0.33}WO_{2.45} | 15 | 32.6 | 7.5 | Polycarbonate | 0.08 | 0.8 | 78.1 | 2.5 | 1.6 | 1.3 |
| Example 3 | Cs_{0.33}WO_{2.45} | 15 | 32.3 | 9.0 | Polycarbonate | 0.08 | 0.8 | 78.7 | 2.6 | 1.6 | 1.3 |
| Example 4 | Cs_{0.33}WO_{2.45} | 15 | 32.7 | 12.0 | Polycarbonate | 0.08 | 0.8 | 78.9 | 2.8 | 1.7 | 1.5 |
| Example 5 | Cs_{0.27}WO_{2.86} | 15 | 31.5 | 6.0 | Polycarbonate | 0.08 | 0.8 | 80.0 | 2.9 | 1.8 | 1.8 |
| Example 6 | Cs_{0.31}WO_{3.21} | 15 | 24.6 | 6.0 | Polycarbonate | 0.08 | 0.8 | 79.2 | 3.4 | 2.0 | 1.9 |
| Example 7 | K_{0.33}WO_{2.45} | 15 | 31.6 | 6.0 | Polycarbonate | 0.08 | 0.8 | 78.0 | 3.4 | 2.2 | 2.0 |
| Example 8 | Rb_{0.33}WO_{2.45} | 15 | 32.2 | 6.0 | Polycarbonate | 0.08 | 0.8 | 79.9 | 2.9 | 2.1 | 2.0 |
| Example 9 | Tl_{0.33}WO_{2.45} | 15 | 32.6 | 6.0 | Polycarbonate | 0.08 | 0.8 | 79.4 | 3.0 | 2.2 | 2.0 |
| Example 10 | Ba_{0.33}WO_{2.45} | 15 | 32.5 | 6.0 | Polycarbonate | 0.08 | 0.8 | 78.0 | 3.7 | 2.6 | 2.0 |
| Example 11 | Cs_{0.33}WO_{2.45} | 15 | 31.8 | 6.0 | Acrylic | 0.08 | 0.8 | 80.8 | 3.4 | 2.5 | 2.0 |
| Example 12 | Cs_{0.33}WO_{2.45} | 15 | 32.2 | 15.0 | Polycarbonate | 0.08 | 0.8 | 79.1 | 3.7 | 2.2 | 1.9 |
| Example 13 | Cs_{0.33}WO_{2.45} | 15 | 32.2 | 4.5 | Polycarbonate | 0.08 | 0.8 | 78.0 | 2.3 | 1.4 | 1.3 |
| Example 14 | Cs_{0.33}WO_{2.45} | 15 | 15.0 | 6.0 | Polycarbonate | 0.08 | 0.8 | 80.3 | 3.8 | 2.7 | 2.1 |
| Example 15 | Cs_{0.33}WO_{2.45} | 15 | 80.0 | 6.0 | Polycarbonate | 0.08 | 0.8 | 79.8 | 2.0 | 1.0 | 1.0 |
| Com.Ex. 1 | Cs_{0.33}WO_{2.45} | 15 | 32.9 | 45.0 | Polycarbonate | 0.08 | 0.8 | 79.2 | 5.6 | 3.1 | 2.6 |
| Com.Ex. 2 | Cs_{0.33}WO_{2.45} | 15 | 96.3 | 3.0 | - | - | - | - | - | - | - |
| Com.Ex. 3 | Cs_{0.33}WO_{2.45} | 15 | - | - | - | - | - | - | - | - | - |

| | | | | | | | | | | | |
|---|---|---|---|---|---|---|---|---|---|---|---|
| * Com.Ex. = Comparative Example * * trans. = transmittance | | | | | | | | | | | |

## Claims

1. A dispersion powder containing composite tungsten oxide fine particles represented by a general formula MxWOy (wherein M element is one or more elements selected from group 1, group 2, and group 13 elements in a periodic table, satisfying 0.1 ≤ x ≤ 1.0, 2.0 ≤ y < 4.0), having a hexagonal crystal structure, having a crystallite size of 15 nm or more and 80 nm or less, and surface-modified with an acrylic dispersant,
wherein a weight ratio of the dispersant to the composite tungsten oxide fine particles is in a range of 0.3 ≤ (weight of dispersant / weight of composite tungsten oxide fine particles) < 3.0.

2. The dispersion powder according to claim 1, wherein the acrylic dispersant has an acidic functional group as a functional group.

3. The dispersion powder according to claim 1 or 2, wherein the M element contained in the composite tungsten oxide fine particles is at least one element selected from the group consisting of Cs, Rb, K, Tl, and Ba.

4. A method for producing a dispersion powder, the method comprising:
adding composite tungsten oxide fine particles having a hexagonal crystal structure and represented by a general formula MxWOy (wherein M element is one or more elements selected from group 1, group 2, and group 13 elements in a periodic table, satisfying 0.1 ≤ x ≤ 1.0, 2.0 ≤ y < 4.0) and an acrylic dispersant, to an organic solvent, and then pulverizing and dispersing a mixture, to produce a dispersion liquid in which the composite tungsten oxide fine particles have a crystallite size of 15 nm or more and 80 nm or less; and
removing the organic solvent from the dispersion liquid to produce a dispersion powder in which a weight ratio of the dispersant to the composite tungsten oxide fine particles is in a range of 0.3 ≤ (weight of dispersant / weight of composite tungsten oxide fine particles) < 3.0.

5. A heat ray shielding resin molded product obtained by diluting and kneading the dispersion powder according to claim 1 or 2 with a thermoplastic resin molding material, and molding a mixture into a predetermined shape.

6. The heat ray shielding resin molded product according to claim 5, wherein the thermoplastic resin molding material is a polycarbonate resin or an acrylic resin.

7. A heat ray shielding laminate, wherein the heat-ray shielding resin molded product according to claim 5 is laminated with another molded product.
